# EUROPÄISCHE PATENTSCHRIFT

(11) **EP 3 212 454 B1**
(45) Veröffentlichungstag und Bekanntmachung des Hinweises auf die Patenterteilung: **27.04.2022**
(21) Anmeldenummer: 14795802.9
(22) Anmeldetag: 30.10.2014
(51) Int. Cl.: B60K 37/06

(54) **SITUATIVE ANZEIGEN**
SITUATIVE DISPLAYS
AFFICHAGE SITUATIONNEL

(43) Veröffentlichungstag der Anmeldung: 06.09.2017
(73) Patentinhaber: Volkswagen Aktiengesellschaft, 38440 Wolfsburg (DE)
(72) Erfinder: WENGELNIK, Heino, 38442 Wolfsburg (DE); ALTHOFF, Frank, 31275 Lehrte (DE); CZELNIK, Mark Peter, 38440 Wolfsburg (DE); WILD, Holger, 10179 Berlin (DE); MEJIA GONZALEZ, Maria Esther, CA, 94063 Redwood City (US)
(86) Internationale Anmeldenummer: PCT/EP2014/073314
(87) Internationale Veröffentlichungsnummer: WO 2016/066197

(56) Entgegenhaltungen:
- EP-A1- 2 581 248
- DE-A1-102012 018 290
- DE-T5-112012 002 381
- DE-T5-112012 004 789
- US-A1- 2013 038 437
- US-A1- 2014 129 092

## Beschreibung

### Stand der Technik

Die vorliegende Erfindung betrifft ein Verfahren sowie eine Vorrichtung zur Unterstützung eines Anwenders bei der Bedienung einer Funktion eines Fortbewegungsmittels. Insbesondere betrifft die vorliegende Erfindung eine Verbesserung der Übersichtlichkeit sowie der Verwendung zur Verfügung stehender Anzeigefläche auf einer Anzeigebedieneinheit eines Fortbewegungsmittels.

US 2013/0038437 A1 offenbart ein System zur situationsadäquaten Anzeige in einem Fortbewegungsmittel eingehender Nachrichten. Sofern zu einem ersten Zeitpunkt eine eingehende Nachricht eine Verkehrssituation die volle Aufmerksamkeit des Fahrers beansprucht, wird die Anzeige der eingehenden Nachricht unterdrückt. Sofern zu einem späteren Zeitpunkt die Verkehrssituation weniger anspruchsvoll ist, wird die eingehende Nachricht dem Anwender angezeigt.

DE 10 2012 004 789 T5 offenbart ein Fortbewegungsmittel, bei welchem im Ansprechen auf das Erkennen eines Unfalls ein Telefondirektruf-Steuer-Icon angeboten wird. Verwendet der Anwender das Steuer-Icon, könnten weitere Standard-Telefon-Funktionen auf einer Anzeigefläche angezeigt werden.

DE 10 2012 018 290 A1 offenbart eine Bedienvorrichtung für einen Kraftwagen und ein Verfahren zum Betreiben einer Bedienvorrichtung, bei welchen im Ansprechen auf das Betätigen einer Auto-Master-Schaltfläche eine Vielzahl weiterer Sub-Auto-Funktionen-Schaltflächen angezeigt wird, während die Auto-Master-Schaltfläche weiterhin ausgegraut dargestellt oder nicht mehr angezeigt wird.

EP 2 581 248 A1 offenbart eine Anwender-Bedienschnittstelle für ein Fortbewegungsmittel, in welchem ein Zugriff auf Funktionen wie E-Mail, Internet und andere Funktionen für ein Bedienelement im Stillstand erlaubt sind, während nach Fahrtantritt dasselbe Bedienelement (Knopf) lediglich die Scheibenwischer, eine Heizung oder die Radio-Wiedergabe bedienbar macht.

US 2014 129092 A1 offenbart ein Informationsanzeigesystem für ein Fahrzeug. In dem Informationsanzeigesystem ändert eine Anzeigevorrichtung gemäß einem Bewegungszustand des Fahrzeugs, nämlich "STOPPING" oder nicht, eine Position eines Anzeigebildschirms, indem ein Teil eines Anzeigebildschirms aus einem sichtbaren Raum in einen unsichtbaren Raum zurückgezogen wird und der zurückgezogene Teil des Anzeigebildschirms aus dem unsichtbaren Raum in den sichtbaren Raum eingesetzt wird. Gemäß der Position des Anzeigebildschirms in der Anzeigevorrichtung ändert eine Anzeigesteuerung die auf einem effektiven Anzeigebereich des Anzeigebildschirms angezeigten Informationen.

DE 11 2012 002381 T5 offenbart ein Fahrassistenzerkennungssystem und ein Verfahren zum Bestimmen von Funktionalitätsniveaus einer interaktiven Einrichtung in einem Fahrzeug. Die interaktive Einrichtung kann bei Empfang einer Ausgabe von der Bearbeitungseinrichtung, dass das vorbestimmte Kriterium nicht erfüllt worden ist, die zweite Betriebsart aktivieren und, bezogen auf die erste Betriebsart, weniger Funktionalität bzw. Funktionen bereitstellen. Falls das Fahrzeug beispielsweise an einem Verkehrssignal gestoppt ist/wird, wo sich der Zustand von einem roten Licht zu einem grünen Licht geändert hat, kann die interaktive Einrichtung die Touchscreen-Schnittstelle deaktivieren.

Im Stand der Technik werden sogenannte Touchscreens für die Anzeige und den Zugriff auf Funktionen von Fortbewegungsmitteln verwendet. Diese bieten ein hohes Maß an Flexibilität und können die Verwendung von in Hardware realisierten Bedienelementen erübrigen. Durch Touchscreens können die Innenräume moderner Fortbewegungsmittel besonders flexibel gestaltet werden. Zudem bietet die Oberfläche von Touchscreens weniger Möglichkeit für ein Eindringen von Fluiden, Fremdkörpern und daraus resultierende Fehlfunktionen. Jedoch ist der Platz auf den Touchscreens begrenzt, weshalb der Zugriff auf manche Funktionen nur über das Navigieren durch vielschichtige Menüs erfolgen kann. Es ist daher eine Aufgabe der vorliegenden

Erfindung, die zuvor genannten Nachteile auszuräumen.

### Offenbarung der Erfindung

Die vorstehend genannte Aufgabe wird erfindungsgemäß durch ein Verfahren gemäss Anspruch 1 zur Unterstützung eines Anwenders bei der Bedienung einer Funktion eines Fortbewegungsmittels gelöst. Das Fortbewegungsmittel kann beispielsweise ein PKW, ein Transporter, ein LKW, ein Luft- und/oder Wasserfahrzeug sein. In einem ersten Schritt wird ein erster vordefinierter Zustand des Fortbewegungsmittels ermittelt. Für den vordefinierten Zustand werden im weiteren Verlaufe dieser Beschreibung vielzahlige Beispiele gegeben. Im Ansprechen auf das Ermitteln des vordefinierten Zustandes wird ein Bedienelement für einen Zugriff auf eine Funktion auf einer Anzeigebedieneinheit des Fortbewegungsmittels angezeigt. Das Bedienelement ist beispielsweise eine Schaltfläche, welche auf einem berührungsempfindlichen Anzeigeelement ("Touchscreen") dargestellt wird. Die Funktion kann beispielsweise direkt über eine dem Bedienelement zugeordnete Bedienhandlung des Anwenders aufgerufen werden. Mit dem erfindungsgemäßen Zugriff auf die Funktion ist insbesondere also nicht lediglich ein Quittieren einer ausgegebenen Information (Informationsfeld, "Pop-up") des Fortbewegungsmittels gemeint. Bevorzugt ist der Zugriff auf die Funktion auch nicht ein Beenden einer Funktion, sondern das Starten einer Funktion des Fortbewegungsmittels. Die Anzeigebedieneinheit kann als Touchscreen ausgestaltet sein, ist jedoch nicht auf eine üblicherweise als Touchscreen bezeichnete Matrixanzeige mit berührungssensitiver Oberfläche beschränkt. Insbesondere können auch projizierte Bedienelemente (in 2-D oder in 3-D projiziert) erfindungsgemäß verwendet werden. Erfindungsgemäß kann die verwendete Anzeigebedieneinheit bestmöglich zur Präsentation von Inhalten und Bereitstellung von Bedienelementen genutzt werden, indem die Anzeige eines Bedienelementes erst dann erfolgt, wenn ein dem Bedienelement bzw. eine dem Bedienelement zugeordnete Funktion aufgrund des ersten vordefinierten Zustandes des Fortbewegungsmittels mit hinreichender Wahrscheinlichkeit durch den Anwender ausgewählt wird. Im Ergebnis wird die Darstellung der Anzeigebedieneinheit aufgeräumter, übersichtlicher und ihre Bedienung auch während der Fahrt mit dem Fortbewegungsmittel für den Anwender einfacher und zeitsparender. Im Ergebnis wird die Verkehrssicherheit bei der Bedienung der Anzeigebedieneinheit während der Teilnahme des Fortbewegungsmittels am Straßenverkehr erhöht.

Die Unteransprüche zeigen bevorzugte Weiterbildungen der Erfindung.

Bevorzugt ist der erste vordefinierte Zustand ein die Einsatzbereitschaft betreffender Zustand. Beispielsweise kann also ein Defekt oder das Erfordernis eines Wartungsvorgangs zur Anzeige des Bedienelementes führen, bei dessen Betätigung ein auf die Wiederherstellung bzw. die Verbesserung der Einsatzbereitschaft gerichteter Funktionsaufruf erfolgt. Beispielsweise kann eine bei Abfahrt des Fortbewegungsmittels noch geöffnete Zugangsvorrichtung (Tür, Heckklappe etc.) elektromotorisch geschlossen werden, sobald der Anwender ein entsprechendes zur Verfügung gestelltes Bedienelement betätigt. Alternativ kann ein nicht unmittelbar reparierbarer Defekt dazu führen, dass ein Bedienelement angezeigt wird, mittels dessen der Anwender eine Telekommunikationsverbindung mit einer Werkstatt aufbauen kann. In diesem Fall kann der Funktionsaufruf zunächst auch darin bestehen, dass dem Anwender eine Vielzahl umliegender Werkstätten durch ein jeweiliges Bedienelement angezeigt wird. Betätigt der Anwender eines dieser Bedienelemente, wird eine Kommunikationsanfrage an die dem Bedienelement zugeordnete Werkstatt gesendet (z.B. ein Telefonanruf, eine Textnachricht, eine E-Mail o.ä.). Auch kann eine mit einem elektronischen Buchungssystem kommunizierende Nachricht (z.B. drahtlos und unter Vermittlung des Internets) zur Unterbreitung eines Terminvorschlags gesendet werden.

Erfindungsgemäss ist der erste vordefinierte Zustand ein Aufenthaltsort und/oder ein Bewegungszustand und/oder eine vordefinierte Verkehrssituation des Fortbewegungsmittels. Der Aufenthaltsort kann beispielsweise satellitenbasiert festgestellt werden. Hierbei können Straßenkarten ausgewertet werden und/oder relative Entfernungen zu Einträgen in einem Adressbuch ermittelt werden. Wird hierbei beispielsweise erkannt, dass sich das Fortbewegungsmittel in der Nähe einer Heimatadresse befindet, kann ein Bedienelement für einen Zugriff auf einen Garagentoröffner (unter Vermittlung einer Aussendung eines Drahtlossignals) angezeigt werden. Wird hingegen ermittelt, dass sich das Fortbewegungsmittel im Stadtverkehr bewegt und an einer Kreuzung (z.B. aufgrund einer roten Ampel) zum Stehen gelangt ist, kann ein Bedienelement für einen Zugriff auf eine "auto-hold-Funktion" (automatisches Bremsen bis zur Betätigung des Gaspedals) angezeigt werden. Als Bewegungszustand kann beispielsweise ein Stillstand oder das Unter- /Überschreiten einer vordefinierten Reisegeschwindigkeit (insbesondere in Abhängigkeit eines aktuellen Aufenthaltsortes (Stadtverkehr/Landstraße/Autobahn)) ermittelt werden. Beispielsweise kann die vorstehend geschilderte auto-hold-Funktion beim Stillstand des Fortbewegungsmittels durch Anzeigen eines korrespondierenden Bedienelementes angeboten werden. Ähnlich kann bei Unterschreiten einer vordefinierten Reisegeschwindigkeit (z.B. für eine vordefinierte Zeitdauer) angenommen werden, dass der Führer des Fortbewegungsmittels einer Park-/Lenk-Assistenz bedarf und ein Bedienelement zum Starten einer entsprechenden Funktion automatisch angezeigt werden. Beim Erkennen eines Stillstandes des Fortbewegungsmittels kann (z.B. in Abhängigkeit einer eingelegten Fahrstufe, insbesondere der Fahrstufe "P") ein Bedienelement zum Öffnen der Heckklappe angezeigt werden, um einen raschen und komfortablen Ladevorgang vorzubereiten. Komfortabel wird das Bedienelement durch das erfindungsgemäße Verfahren insbesondere dadurch, dass es in einer erheblich größeren Anzeigefläche dargestellt werden kann, da die jeweilige Situation nur vergleichsweise wenige Funktionsaufrufe wahrscheinlich macht. Insbesondere erübrigt sich ein Durchsuchen unterschiedlicher Hierarchieebenen einer Menüstruktur. Auch die Verkehrssituation des Fortbewegungsmittels ( Stadtfahrt, Überlandfahrt, Autobahnfahrt, stop-and-go-Verkehr, Nachtfahrt) kann ausgewertet und zur erfindungsgemäßen Anzeige jeweiliger Bedienelemente verwendet werden. Erkennt das Fahrzeug beispielsweise eine Autobahnfahrt im stop-and-go-Betrieb, kann ein automatischer Abstandshalteassistent durch Anzeigen eines entsprechenden Bedienelementes angeboten und nach dessen Betätigung unverzüglich gestartet werden. Entsprechendes gilt für eine Überlandfahrt bei Dämmerung oder in der Nacht, wobei ein angezeigtes Bedienelement für den Zugriff auf einen Fernlichtassistenten angezeigt werden kann.

Bevorzugt kann zusätzlich erkannt werden, dass eine vordefinierte Zeitdauer seit dem Erreichen, insbesondere seit dem Bestehen, des ersten vordefinierten Zustandes abgelaufen ist und/oder eine mit dem Fortbewegungsmittel zurückgelegte Wegstrecke seit dem Ermitteln des ersten vordefinierten Zustandes eine vordefinierte Länge erreicht hat. Bevorzugt kann erst im Ansprechen darauf, das vorstehend beschriebene Anzeigen des Bedienelementes erfolgen. Auf diese Weise kann verhindert werden, dass nur äußerst kurzfristig mit dem vordefinierten Zustand übereinstimmende Bedingungen das Anzeigen des Bedienelementes begründen, ohne dass der Anwender hinreichend Zeit hat, das Bedienelement auch tatsächlich zu betätigen. Zudem können Toleranzen bei der Ermittlung des vordefinierten Zustandes ausgeglichen werden. Die vorstehend beschriebene bevorzugte Ausgestaltung kann auch als Implementieren einer Hysterese gesehen werden, um den Bildschirm der Anzeigebedieneinheit zu beruhigen.

Weiter umfasst das erfindungsgemäße Verfahren ein Erkennen eines zweiten vordefinierten Zustandes des Fortbewegungsmittels. Im Ansprechen darauf wird das zuvor angezeigte Bedienelement verborgen. Durch das Verbergen des Bedienelementes wird die Anzeigebedieneinheit um Bedienelemente für Funktionsaufrufe solcher Funktionen bereinigt, deren Aufruf in Anbetracht des zweiten vordefinierten Zustandes unwahrscheinlich ist. Vielmehr kann Anzeigefläche für die Anzeige solcher Bedienelemente vorgesehen werden, deren Verwendung wahrscheinlicher ist. Auf diese Weise findet sich der Anwender besser auf der Anzeigebedieneinheit zurecht und kann zustandsabhängige Funktionsaufrufe komfortabler und sicherer vornehmen.

Wie in Verbindung mit dem Anzeigen des Bedienelementes ausgeführt, kann auch für das Verbergen des Bedienelementes eine Hysterese implementiert werden. Diese kann durch Ablauf einer vordefinierten Zeitdauer seit dem Erreichen/Bestehen des zweiten vordefinierten Zustandes oder durch eine bestimmte zurückgelegte Wegstreckenlänge mit dem Fortbewegungsmittels vordefiniert sein, seit der zweite vordefinierte Zustand ermittelt wurde. Mit anderen Worten kann der erste Zustand durch einen ersten Wert einer Zustandsgröße vordefiniert sein, während der zweite Zustand durch einen zweiten, vom ersten Wert verschiedenen Wert des Zustands vordefiniert ist. Je nachdem, in welche Richtung (Ansteigen bzw. Verringern) sich die Zustandsgröße ändert, kann ein anderer Wert die Anzeige des Bedienelementes bzw. das Verbergen des Bedienelementes bedingen, um unnötige Unruhe auf der Anzeigebedieneinheit zu vermeiden.

Das Bedienelement kann beispielsweise als eine in einen bisherigen Anzeigeinhalt integrierte Schaltfläche ausgestaltet sein. Auch kann ein bislang mit einer anderen Funktion assoziiertes Bedienelement nach dem Ermitteln des ersten vordefinierten Zustandes dem Aufruf einer anderen Funktion zugeordnet werden. Hierbei kann insbesondere die Gestaltung (z.B. ein Symbol, ein Schriftzug, o.ä.) des Bedienelementes ausgetauscht werden, um die geänderte Zuordnung wiederzugeben. Alternativ oder zusätzlich kann eine dem bisherigen Anzeigeinhalt überlagerte Schaltfläche (sog. "pop-up") als Bedienelement für den Zugriff auf die Funktion angezeigt werden. Selbstverständlich kann die Schaltfläche mehrere Optionen anbieten, von welchen lediglich eine den Zugriff auf eine Funktion des Fortbewegungsmittels bietet, während eine andere Option eine andere Funktion oder eine Ablehnung sämtlicher Optionen durch den Anwender zugeordnet sind.

Zusätzlich zu den bereits vorstehend geschilderten Beispielen für dem Bedienelement zugeordnete Funktionen kann die Aktivierung eines Start-/Stopp-Betriebes (automatischer Motorstart beim Vorbereiten einer Weiterfahrt an einer roten Ampel) angeboten werden. Sofern der erste vordefinierte Zustand des Fortbewegungsmittels eine mangelbehaftete Einsatzbereitschaft des Fortbewegungsmittels ist, kann die durch das Bedienelement zur Verfügung gestellte Funktion auch das Wechseln zu einem Anzeigeinhalt umfassen zusätzliche Informationen zum vorliegenden Mangel sein. Mit anderen Worten erhält der Anwender durch Betätigen des Bedienelementes in dieser Situation zusätzliche Informationen oder mehr Details zu den Problemen und/oder möglichen Abhilfemaßnahmen.

Die oben genannte Aufgabe der vorliegenden Erfindung wird gemäß einem zweiten Aspekt durch eine Vorrichtung gemäss Anspruch 7 zur Unterstützung eines Anwenders bei der Bedienung einer Funktion eines Fortbewegungsmittels gelöst. Die Vorrichtung umfasst eine Auswerteeinheit zur Erkennung eines vordefinierten Zustandes des Fortbewegungsmittels und eine Anzeigebedieneinheit, welche eingerichtet ist, im Ansprechen auf ein Erkennen des vordefinierten Zustandes ein Bedienelement für einen Zugriff auf eine Funktion anzuzeigen. Die Auswerteeinheit kann einen programmierbaren Prozessor umfassen. Die Merkmale, Merkmalskombinationen und die sich aus diesen ergebenden Vorteile entsprechen denen des oben beschriebenen Verfahrens derart ersichtlich, dass zur Vermeidung von Wiederholungen auf die obigen Ausführungen verwiesen wird.

Gemäß einem dritten Erfindungsaspekt wird ein Computerprogrammprodukt (z.B. ein digitaler Datenspeicher) vorgeschlagen, auf welchem Instruktionen gespeichert sind, die einen programmierbaren Prozessor einer Vorrichtung gemäß dem zweitgenannten Erfindungsaspekt in die Lage versetzen, die Schritte eines Verfahrens gemäß dem erstgenannten Erfindungsaspekt durchzuführen. Das Computerprogrammprodukt kann als CD, DVD, Blu-ray-Disc, Flash-Speicher, Festplatte, RAM/ROM, Cache etc. ausgestaltet sein.

Gemäß einem vierten Aspekt der vorliegenden Erfindung wird eine Signalfolge repräsentierend Instruktionen vorgeschlagen, welche einen programmierbaren Prozessor einer Auswerteeinheit einer Vorrichtung gemäß dem zweitgenannten Erfindungsaspekt in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittels vorgeschlagen, welches beispielsweise als PKW, Transporter, LKW, als Luft- und/oder Wasserfahrzeug ausgestaltet sein kann. Das Fortbewegungsmittel umfasst eine Vorrichtung, wie sie in Verbindung mit dem zweitgenannten Erfindungsaspekt beschrieben worden ist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Prinzipskizze eines Ausführungsbeispiels eines erfindungsgemäßen Fortbewegungsmittels mit einem Ausführungsbeispiel einer erfindungsgemäßen Vorrichtung;
- Figur 2: ein kombiniertes Anzeige-Zustandsdiagramm zur Veranschaulichung der Anzeige bzw. des Verbergens des erfindungsgemäß vorgeschlagenen Bedienelementes; und
- Figur 3: ein Flussdiagramm veranschaulichend Schritte eines Ausführungsbeispiels eines erfindungsgemäßen Verfahrens

### Ausführungsformen der Erfindung

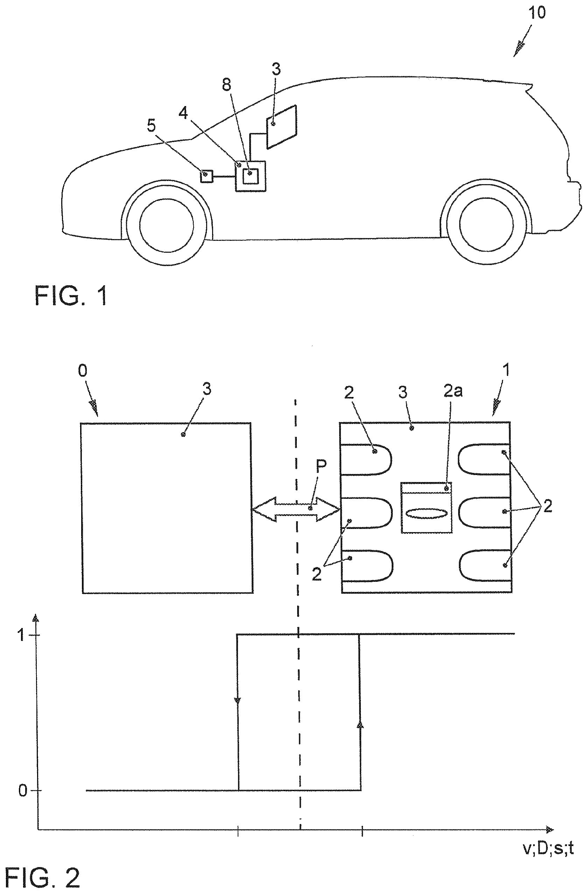

Figur 1 zeigt einen PKW 10 als Fortbewegungsmittel, in welchem ein Touchscreen 3 als Anzeigebedieneinheit mit einem elektronischen Steuergerät 4 als Auswerteeinheit informationstechnisch verbunden ist. Das elektronische Steuergerät 4 weist einen Prozessor 8 auf, welcher Informationen eines Zustandssensors 5 empfangen, verarbeiten und in eine geänderte Anzeige auf dem Touchscreen 3 umsetzen kann.

Figur 2 zeigt den Touchscreen 3 in zwei unterschiedlichen Zuständen. Im Zustand 0 (links der gestrichelten Linie) werden keine Bedienelemente für einen Zugriff auf eine Funktion des Fortbewegungsmittels angezeigt (leerer Touchscreen 3). Unterhalb dieser Darstellung des Touchscreens 3 ist ein Zustandsgraph dargestellt, welcher den Wechsel des Zustandes von 0 auf 1 bzw. von 1 auf 0 in Abhängigkeit einer Reisegeschwindigkeit v bzw. in Abhängigkeit einer Distanz D von einem vordefinierten Ort bzw. in Abhängigkeit einer Wegstrecke s seit einem Erkennen eines vordefinierten ersten bzw. zweiten Zustandes des Fortbewegungsmittels bzw. in Abhängigkeit einer Zeit t seit dem Ermitteln eines ersten bzw. zweiten vordefinierten Zustandes des Fortbewegungsmittels beschreibt. Rechts des Doppelpfeils P ist der Touchscreen 3 im Zustand 1 dargestellt. Mehrere in einen bisherigen Anzeigeinhalt integrierte Schaltflächen 2 (jeweils am Rand des Touchscreens 3) als auch ein dem bisherigen Anzeigeinhalt überlagertes pop-up 2a werden nach dem Wechsel aus dem Zustand 0 in den Zustand 1 angezeigt. Hierbei zeigen die Schaltflächen 2, 2a lediglich Beispiele für Positionen und Ausgestaltungen erfindungsgemäßer Bedienelemente, ohne dass ein Wechsel der Zustände von 0 auf 1 notwendigerweise mehrerer Schaltflächen 2, 2a zum Vorschein bringen muss. Beispielsweise können die Schaltflächen 2, 2a dem Aussenden eines Signals an einen Garagentoröffner ("UKTU"), dem Aktivieren einer Auto-hold-Funktion, dem Starten einer Park-/Lenkassistenz, dem Starten eines Parkplatzsuch-Assistenten, einem Aufruf zusätzlicher Details zu einer Wartungsbedarfsmeldung, dem Aktivieren einer Start-/Stopp-Funktion und einem Öffnen einer Heckklappe des Fahrzeug zugeordnet sein.

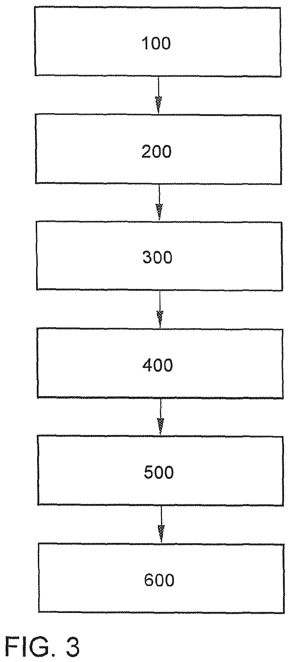

Figur 3 zeigt Schritte eines Ausführungsbeispiels eines erfindungsgemäßen Verfahrens zur Unterstützung eines Anwenders bei der Bedienung einer Funktion eines Fortbewegungsmittels. In Schritt 100 wird ein erster vordefinierter Zustand des Fortbewegungsmittels ermittelt. Beispielsweise unterschreitet das Fortbewegungsmittel eine vordefinierte Reisegeschwindigkeit, worauf ein Stillstand des Fortbewegungsmittels erkannt wird. In Schritt 200 wird der Ablauf einer vordefinierten Zeitdauer (z.B. 1 Sekunde) seit dem Erreichen des Stillstandes erkannt. Im Ansprechen darauf wird in Schritt 300 dem Anwender ein Bedienelement für den Zugriff auf ein Öffnen der Heckklappe auf einer Anzeigebedieneinheit des Fortbewegungsmittels dargestellt. Anstatt die Heckklappe zu öffnen, setzt der Führer des Fortbewegungsmittels in Schritt 400 die Fahrt fort und verlässt somit den ersten vordefinierten Zustand. Nach dem Erreichen einer Geschwindigkeit in Schritt 400, welche als zweiter vordefinierter Zustand (z.B. 3 km/h) vordefiniert ist, wird in Schritt 500 erkannt, dass das Fortbewegungsmittel bereits 20 m als Beispiel einer vordefinierten Wegstrecke seit dem Ermitteln des zweiten vordefinierten Zustandes zurückgelegt hat. Im Ansprechen darauf wird in Schritt 600 das zum Öffnen der Heckklappe angebotenen Bedienelement wieder verborgen, um Platz auf der Anzeigebedieneinheit für andere Funktionen bzw. diesen zugeordnete Bedienelemente freizugeben.

### Bezugszeichenliste

- 0: zweiter vordefinierter Zustand des Fortbewegungsmittels
- 1: erster vordefinierter Zustand des Fortbewegungsmittels
- 2: Bedienelement
- 2a: Pop-up
- 3: Touchscreen
- 4: Steuergerät
- 5: Zustandssensor
- 8: Prozessor
- 10: Fortbewegungsmittel
- 100-600: Verfahrensschritte
- D: räumliche Entfernung
- P: Doppelpfeil
- S: Wegstrecke
- t: Zeit
- v: Reisegeschwindigkeit

## Patentansprüche

1. Verfahren zur Unterstützung eines Anwenders bei der Bedienung einer Funktion eines Fortbewegungsmittels (10) umfassend die Schritte:
- Ermitteln (100) eines ersten vordefinierten Zustandes (1) des Fortbewegungsmittels (10), und im Ansprechen darauf
- Anzeigen (300) eines Bedienelementes (2, 2a) für einen Zugriff auf eine Funktion auf einer Anzeigebedieneinheit (3) des Fortbewegungsmittels (10),
**gekennzeichnet durch**
- Ermitteln (400) eines zweiten zeitlich auf den ersten Zustand (1) folgenden vordefinierten Zustandes (0) des Fortbewegungsmittels (10), und im Ansprechen darauf
- Verbergen des Bedienelementes (2, 2a), wobei der erste vordefinierte Zustand (1)
- ein die Einsatzbereitschaft des Fortbewegungsmittels (10) betreffender Zustand, und/oder
- ein Aufenthaltsort, und/oder
- eine vordefinierte Verkehrssituation des Fortbewegungsmittels (10), nämlich eine Stadtfahrt, Überlandfahrt, Autobahnfahrt, stop-and-go-Verkehr oder Nachtfahrt, und/oder
- ein Erreichen und/oder Verlassen eines vordefinierten ersten Ortes ist.

2. Verfahren nach Anspruch 1 weiter umfassend die Schritte
- Erkennen (200)
- eines Ablaufes einer vordefinierten Zeitdauer seit dem Ermitteln des ersten vordefinierten Zustandes (1), und/oder
- einer vordefinierten Länge einer mit dem Fortbewegungsmittel (10) zurückgelegten Wegstrecke seit dem Ermitteln des ersten vordefinierten Zustandes (1), und/oder
- einer vordefinierten räumlichen Entfernung von einem Ort, an welchem das Ermitteln des ersten vordefinierten Zustandes (1) erfolgte, und erst im Ansprechen darauf
- Anzeigen (300) des Bedienelementes (2, 2a).

3. Verfahren nach Anspruch 2 weiter umfassend die Schritte
- Erkennen (500)
- eines Ablaufes einer vordefinierten Zeitdauer seit dem Ermitteln des zweiten vordefinierten Zustandes (0), und/oder
- einer vordefinierten Länge einer mit dem Fortbewegungsmittel (10) zurückgelegten Wegstrecke seit dem Ermitteln des zweiten vordefinierten Zustandes (0), und/oder
- einer vordefinierten räumlichen Entfernung von einem Ort, an welchem das Ermitteln des zweiten vordefinierten Zustandes (0) erfolgte, und erst im Ansprechen darauf
- Verbergen (600) des Bedienelementes (2, 2a).

4. Verfahren nach Anspruch 2 oder 3, wobei der erste vordefinierte Zustand (1) eine erste Reisegeschwindigkeit des Fortbewegungsmittels (10) und der zweite Zustand (0) eine zweite, von der ersten Reisegeschwindigkeit verschiedene Reisegeschwindigkeit ist.

5. Verfahren nach einem der vorstehenden Ansprüche, wobei das Anzeigen (300) in Form
- einer in einen bisherigen Anzeigeinhalt integrierten Schaltfläche (2), und/oder
- einer dem bisherigen Anzeigeinhalt überlagerten Schaltfläche (2a) erfolgt.

6. Verfahren nach einem der vorstehenden Ansprüche, wobei die Funktion
- einem Garagentoröffner oder
- einem Parkplatzsuchassistenten, und/oder
- einem Abstandsmeldesystem, und/oder
- einem Parklenkassistenten, und/oder
- einem Bremsassistenten, und/oder
- einem Start-/Stopp-Assistenten, und/oder
- einem Wechsel von einem bisherigen Anzeigeinhalt zu einem neuen Anzeigeinhalt umfassend zusätzliche Informationen bezüglich einer Einsatzbereitschaft des Fortbewegungsmittels (10) zugeordnet ist.

7. Vorrichtung zur Unterstützung eines Anwenders bei der Bedienung einer Funktion eines Fortbewegungsmittels (10) umfassend:
- eine Auswerteeinheit (4) zur Erkennung eines vordefinierten Zustandes (0, 1) des Fortbewegungsmittels (10), und
- Anzeigebedienmittel (3), welche eingerichtet sind, im Ansprechen auf ein Erkennen des vordefinierten Zustandes (0, 1) ein Bedienelement (2, 2a) für einen Zugriff auf eine Funktion anzuzeigen,
**dadurch gekennzeichnet, dass** die Auswerteeinheit (4) weiter eingerichtet ist, einen zweiten auf den ersten vordefinierten Zustand (1) folgenden vordefinierten Zustand (0) des Fortbewegungsmittels (10) zu ermitteln und die Anzeigebedienmittel (3) eingerichtet sind, im Ansprechen darauf das Bedienelement (2, 2a) zu verbergen,
wobei der erste vordefinierte Zustand (1)
- ein die Einsatzbereitschaft des Fortbewegungsmittels (10) betreffender Zustand, und/oder
- ein Aufenthaltsort, und/oder
- eine vordefinierte Verkehrssituation des Fortbewegungsmittels (10), nämlich eine Stadtfahrt, Überlandfahrt, Autobahnfahrt, stop-and-go-Verkehr oder Nachtfahrt, und/oder
- ein Erreichen und/oder Verlassen eines vordefinierten ersten Ortes ist.

8. Vorrichtung nach Anspruch 7, welche weiter eingerichtet ist, ein Verfahren nach einem der vorstehenden Ansprüche 1 bis 6 durchzuführen.

9. Computerprogrammprodukt umfassend Instruktionen, welche, wenn Sie auf einem programmierbaren Prozessor einer Auswerteeinheit (4) einer Vorrichtung nach einem der Ansprüche 7 oder 8 ausgeführt werden, die Auswerteeinheit (4) veranlassen, die Schritte eines Verfahrens nach einem der Ansprüche 1 bis 6 durchzuführen.

10. Signalfolge repräsentierend Instruktionen, welche, wenn Sie auf einem programmierbaren Prozessor einer Auswerteeinheit (4) einer Vorrichtung nach einem der Ansprüche 7 oder 8 ausgeführt werden, die Auswerteeinheit (4) veranlassen, die Schritte eines Verfahrens nach einem der Ansprüche 1 bis 6 durchzuführen.

11. Fortbewegungsmittel, insbesondere Fahrzeug, umfassend eine Vorrichtung nach Anspruch 7 oder 8.

## Claims

1. Method for assisting a user when controlling a function of a means of transport (10), comprising the steps of:
- ascertaining (100) a first predefined status (1) of the means of transport (10), and, as a reaction thereto,
- displaying (300) a control element (2, 2a) for access to a function on a display control unit (3) of the means of transport (10),
**characterized by**
- ascertaining (400) a second predefined status (0) of the means of transport (10), which temporally follows the first status (1), and, as a reaction thereto,
- hiding the control element (2, 2a),
wherein the first predefined status (1) is
- a status relating to the operational readiness of the means of transport (10), and/or
- a current location, and/or
- a predefined traffic situation of the means of transport (10), specifically a city drive, a cross-country drive, a motorway drive, stop-and-go traffic or a night drive, and/or
- reaching and/or leaving of a predefined first location.

2. Method according to Claim 1, furthermore comprising the steps of
- detecting (200)
- a passing of a predefined time period since the first predefined status (1) was ascertained, and/or
- a predefined length of a distance travelled with the means of transport (10) since the first predefined status (1) was ascertained, and/or
- a predefined spatial distance from a location at which the first predefined status (1) was ascertained, and, only as a reaction thereto,
- displaying (300) the control element (2, 2a).

3. Method according to Claim 2, further comprising the steps of
- detecting (500)
- a passing of a predefined time period since the second predefined status (0) was ascertained, and/or
- a predefined length of a distance travelled with the means of transport (10) since the second predefined status (0) was ascertained, and/or
- a predefined spatial distance from a location at which the second predefined status (0) was ascertained, and, only as a reaction thereto,
- hiding (600) the control element (2, 2a).

4. Method according to Claim 2 or 3, wherein the first predefined status (1) is a first travel speed of the means of transport (10) and the second status (0) is a second travel speed, which differs from the first travel speed.

5. Method according to one of the preceding claims, wherein the displaying (300) takes place in the form of
- a button (2) integrated in a prior display content, and/or
- a button (2a) that is overlaid on the prior display content.

6. Method according to one of the preceding claims, wherein the function is assigned to
- a garage door opener or
- a parking space search assistant, and/or
- a proximity sensor system, and/or
- a park steering assistant, and/or
- a brake assistant, and/or
- a start/stop assistant, and/or
- a change from a prior display content to a new display content comprising additional information relating to an operational readiness of the means of transport (10).

7. Apparatus for assisting a user when controlling a function of a means of transport (10), comprising:
- an evaluation unit (4) for detecting a predefined status (0, 1) of the means of transport (10), and
- display control means (3), which are configured to display, as a reaction to the predefined status (0, 1) being detected, a control element (2, 2a) for access to a function,
**characterized in that** the evaluation unit (4) is furthermore configured to ascertain a second predefined status (0) of the means of transport (10) that follows the first predefined status (1), and the display control means (3) are configured to hide, as a reaction thereto, the control element (2, 2a),
wherein the first predefined status (1) is
- a status relating to the operational readiness of the means of transport (10), and/or
- a current location, and/or
- a predefined traffic situation of the means of transport (10), specifically a city drive, a cross-country drive, a motorway drive, stop-and-go traffic or a night drive, and/or
- reaching and/or leaving of a predefined first location.

8. Apparatus according to Claim 7, which is furthermore configured to carry out a method according to one of the preceding Claims 1 to 6.

9. Computer program product comprising instructions which, when they are executed on a programmable processor of an evaluation unit (4) of an apparatus according to one of Claims 7 or 8, cause the evaluation unit (4) to carry out the steps of a method according to one of Claims 1 to 6.

10. Signal sequence representing instructions which, when they are executed on a programmable processor of an evaluation unit (4) of an apparatus according to one of Claims 7 or 8, cause the evaluation unit (4) to carry out the steps of a method according to one of Claims 1 to 6.

11. Means of transport, in particular vehicle, comprising an apparatus according to Claim 7 or 8.

## Revendications

1. Procédé d'assistance d'un utilisateur lors de la commande d'une fonction d'un moyen de déplacement (10), comprenant les étapes suivantes :
- détermination (100) d'un premier état prédéfini (1) du moyen de déplacement (10), et en réponse à cela
- affichage (300) d'un élément de commande (2, 2a) pour un accès à une fonction sur une unité de commande d'affichage (3) du moyen de déplacement (10), **caractérisé par**
- détermination (400) d'un deuxième état prédéfini (0) du moyen de déplacement (10), qui suit le premier état prédéfini (1), et en réponse à cela
- masquage de l'élément de commande (2, 2a),
le premier état prédéfini (1) étant
- un état concernant l'état prêt pour l'utilisation du moyen de déplacement (10) et/ou
- un emplacement et/ou
- une situation de trafic prédéfinie du moyen de déplacement (10), à savoir une circulation en ville, une circulation par voie terrestre, une circulation sur autoroute, un trafic de type stop-and-go ou une circulation de nuit et/ou
- le fait d'atteindre et/ou de quitter un premier endroit prédéfini.

2. Procédé selon la revendication 1, comprenant en outre les étapes suivantes
- reconnaissance (200)
- d'un écoulement d'une durée prédéfinie depuis la détermination du premier état prédéfini (1) et/ou
- d'une longueur prédéfinie d'un trajet parcouru avec le moyen de déplacement (10) depuis la détermination du premier état prédéfini (1) et/ou
- d'un éloignement prédéfini dans l'espace d'un endroit auquel a eu lieu la détermination du premier état prédéfini (1) et seulement en réponse à cela
- affichage (300) de l'élément de commande (2, 2a).

3. Procédé selon la revendication 2, comprenant en outre les étapes suivantes
- reconnaissance (500)
- d'un écoulement d'une durée prédéfinie depuis la détermination du deuxième état prédéfini (0) et/ou
- d'une longueur prédéfinie d'un trajet parcouru avec le moyen de déplacement (10) depuis la détermination du deuxième état prédéfini (0) et/ou
- d'un éloignement prédéfini dans l'espace d'un endroit auquel a eu lieu la détermination du deuxième état prédéfini (0) et seulement en réponse à cela
- masquage (600) de l'élément de commande (2, 2a).

4. Procédé selon la revendication 2 ou 3, le premier état prédéfini (1) étant une première vitesse de croisière du moyen de déplacement (10) et le deuxième état (0) étant une deuxième vitesse de croisière, différente de la première vitesse de croisière.

5. Procédé selon l'une des revendications précédentes, l'affichage (300) s'effectuant sous la forme
- d'un bouton (2) intégré dans un contenu d'affichage déjà présent et/ou
- d'un bouton (2a) superposé au contenu d'affichage déjà présent.

6. Procédé selon l'une des revendications précédentes, la fonction étant associée à
- un système d'ouverture de porte de garage et/ou
- un assistant de recherche de place de stationnement et/ou
- un système d'avertissement de distance et/ou
- un assistant de manœuvre de stationnement et/ou
- un assistant de freinage et/ou
- un assistant de départ/arrêt et/ou
- un changement d'un contenu d'affichage actuel vers un nouveau contenu d'affichage comprenant des informations supplémentaires concernant l'état prêt pour l'utilisation du moyen de déplacement (10).

7. Dispositif pour assister un utilisateur lors de la commande d'une fonction d'un moyen de déplacement (10), comprenant :
- une unité d'interprétation (4) destinée à reconnaître un état prédéfini (0, 1) du moyen de déplacement (10), et
- des moyens de commande d'affichage (3), qui sont conçus pour, en réponse à une reconnaissance de l'état prédéfini (0, 1), afficher un élément de commande (2, 2a) pour un accès à une fonction,
**caractérisé en ce que** l'unité d'interprétation (4) est en outre conçue pour déterminer un deuxième état prédéfini (0) du moyen de déplacement (10), qui suit le premier état prédéfini (1), et les moyens de commande d'affichage (3) sont conçus pour, en réponse à cela, masquer l'élément de commande (2, 2a),
le premier état prédéfini (1) étant
- un état concernant l'état prêt pour l'utilisation du moyen de déplacement (10) et/ou
- un emplacement et/ou
- une situation de trafic prédéfinie du moyen de déplacement (10), à savoir une circulation en ville, une circulation par voie terrestre, une circulation sur autoroute, un trafic de type stop-and-go ou une circulation de nuit et/ou
- le fait d'atteindre et/ou de quitter un premier endroit prédéfini.

8. Dispositif selon la revendication 7, lequel est conçu pour mettre en œuvre un procédé selon l'une des revendications 1 à 6.

9. Produit de programme informatique comprenant des instructions qui, lorsqu'elles sont exécutées sur un processeur programmable d'une unité d'interprétation (4) d'un dispositif selon l'une des revendications 7 ou 8, amènent l'unité d'interprétation (4) à exécuter les étapes d'un procédé selon l'une des revendications 1 à 6.

10. Séquence de signaux représentant des instructions qui, lorsqu'elles sont exécutées sur un processeur programmable d'une unité d'interprétation (4) d'un dispositif selon l'une des revendications 7 ou 8, amènent l'unité d'interprétation (4) à exécuter les étapes d'un procédé selon l'une des revendications 1 à 6.

11. Moyen de déplacement, notamment véhicule, comprenant un dispositif selon l'une des revendications 7 ou 8.
